# EUROPÄISCHE PATENTANMELDUNG

(11) **EP 0 985 516 A2**
(43) Veröffentlichungstag der Anmeldung: **15.03.2000**
(21) Anmeldenummer: 99116768.5
(22) Anmeldetag: 30.08.1999
(51) Int. Cl.: B29C 65/00, B29C 44/00

(54) **Verfahren zum Herstellen von Gegenständen aus ausgeschäumten flexiblen Hüllen und Gegenstand aus einer ausgeschäumten flexiblen Hülle**

(30) Priorität: 10.09.1998 DE 19841348
(71) Anmelder: Hennecke GmbH, 51379 Leverkusen (DE)
(72) Erfinder: Althausen, Ferdinand, 53819 Neunkirchen-Seelscheid (DE); Wirth, Jürgen, 51147 Köln (DE)
(74) Vertreter: Drope, Rüdiger, Dr.

(57) **Zusammenfassung**

Zum Herstellen von optisch einwandfrei aussehenden Gegenständen, wie Spielzeugtiere, Puppen, Bälle, Kissen oder Kfz-Kopfstützen, aus ausgeschäumten flexiblen Hüllen (3) beläßt man in einer Naht (4) der von "links" miteinander vernähten Zuschnitte (1, 2) eine Öffnung (7), verschließt diese Öffnung (7) lose mit einem langen Faden (8), weitet vor dem Wenden der Hülle (3) diese Öffnung (7), wobei der Faden (8) nachrutscht, wendet die Hülle (3) und füllt ein während des Ausreagierens Klebwirkung aufweisendes, Weichschaumstoff bildendes Reaktionsgemisch durch die Öffnung (7) ein und verschließt diese Öffnung (7) durch Ziehen an dem Ende (9, 10) des Fadens (8), läßt nach dem Verschließen der Öffnung (7) den Faden (8) und die Ränder (5, 6) der Öffnung (7) auf der Innenseite der Hülle (3) von dem aushärtenden Reaktionsgemisch dauerhaft verkleben und entfernt den überschüssigen Fadenrest (8).

## Beschreibung

Die Erfindung betrifft ein Verfahren zum Herstellen von Gegenständen aus ausgeschäumten flexiblen Hüllen, indem eine Hülle von "links" aus mindestens zwei Zuschnitten zusammengenäht wird, wobei in einer Naht eine Öffnung mit Rändern belassen und die Hülle durch diese Öffnung auf "rechts" gewendet und mit einem fließfähigen Reaktionsgemisch ausgeschäumt wird und wobei danach die Öffnung mit einem Faden verschlossen wird, sowie einen Gegenstand aus einer ausgeschäumten flexiblen Hülle.

Gegenstände mit einer flexiblen Hülle, wie Spielzeugtiere, Puppen, Bälle, Kissen oder Kfz-Kopfstützen, bestanden ursprünglich aus entsprechenden von "links" zusammengenähten Zuschnitten, wobei eine Öffnung zum Wenden und zum Ausstopfen mit einer weichen Füllung, wie Seegras, Holzwolle oder Schaumstoffflocken, belassen wurde. Nach dem Ausstopfen wurde die Öffnung von "rechts" vernäht. Als flexible Hülle sind alle flexiblen Materialien bekannt und geeignet, wie Folien, Leder, Kunstleder, insbesondere Textil.

Im Sinne einer optimierten Fertigung hat man die flexible Hülle später mit einem fließ- und reaktionsfähigen, weichen Schaumstoffbildenden Gemisch, vorzugsweise aus weichen Polyurethan-Schaumstoff bildenden Komponenten, ausgeschäumt. Dabei wurde darauf geachtet, daß das Reaktionsgemisch die Hülle nicht durchdringen konnte. Dies hat man durch eine innere undurchlässige Beschichtung der Hülle verhindert und/oder durch Verwendung eines bereits angeschäumten, in der Fachwelt als "froth" bezeichneten Reaktionsgemisches. Nicht vermeiden konnte man bisher, daß der sich an der Wende- und Einfüllöffnung gebildete Schaumstoffansatz von Hand entfernt und danach die Öffnung von Hand vernäht werden mußte. Daß dabei die Lage der Öffnung mehr oder weniger unansehnlich sichtbar blieb, ließ sich bei aller Geschicklichkeit beim Vernähen nicht vermeiden.

Es besteht sonach die Aufgabe, ein Verfahren der eingangs genannten Art zu schaffen, mit welchem insbesondere im Bereich der Wende- und Einfühlöffnung optisch einwandfreie Gegenstände herstellbar sind.

Diese Aufgabe wird dadurch gelöst, daß die Ränder der verbliebenen Öffnung von "links" mit mindestens einem langen, mindestens ein greifbares Ende aufweisenden, weit überstehenden Faden im Zickzack mehrfach verbunden werden, daß die Öffnung geweitet wird, wobei der Faden nachgezogen wird, daß erst nun die Hülle durch diese Öffnung auf "rechts" gewendet und mit einem während des Ausreagierens Klebwirkung aufweisenden Reaktionsgemischs ausgeschäumt wird, daß nach dem Ausschäumen die Öffnung durch Ziehen an dem greifbaren Ende des langen Fadens zusammengezogen und verschlossen wird, daß nach dem Verschließen die Ränder und der Faden vom Reaktionsgemisch dauerhaft verklebt werden und daß das an der verschlossenen Öffnung überstehende Ende des Fadens nach dem Ausreagieren des Reaktionsgemisches entfernt wird.

Dadurch wird erreicht, daß einerseits durch Aufweiten der Öffnung die Möglichkeit zum Wenden der Hülle und zum Einführen des Einfüllorgans geschaffen wird, weil dabei der Faden entsprechend nachgezogen wird. Und andererseits wird später durch Ziehen am Fadenende die Öffnung derart verschlossen, daß ein insbesondere an dieser Stelle optisch einwandfreier Gegenstand entsteht, so daß sich die ursprüngliche Lage der Öffnung nicht von den restlichen Nahtstellen unterscheiden läßt. Es versteht sich, daß das greifbare Fadenende auch nach dem Aufweiten der Öffnung noch "greifbar" lang bleiben muß. Die Öffnung wird durch den gezogenen Faden praktisch unsichtbar und es bildet sich dabei eine Art Naht, welche im Bereich jener Öffnung die beiden Ränder aneinander preßt. Wird an dem Faden just in jenem Augenblick gezogen, in welchem das Reaktionsgemisch ausreagiert, so werden dadurch Faden und Nahtränder verklebt und es bedarf vor dem Entfernen des überstehenden Fadenendes keiner zusätzlichen Sicherung des Fadenendes am Öffnungsbereich.

Vorzugsweise wird als Faden ein Monofil verwendet.

Bei der Handhabung der Hülle und insbesondere beim Einführen des Füllorgans zum Einbringen des Reaktionsgemisches hat dies gegenüber einem Multifil den Vorteil, daß bei einem Monofil keine Gefahr des Verschlingens besteht.

Selbstverständlich besteht die Möglichkeit, gemäß einer besonderen Durchführungsform des neuen Verfahrens das Ende des Fadens nach dem Verschließen der Öffnung, aber vor dem Entfernen des überstehenden Endes zu sichern, beispielsweise durch Vernähen oder Verknoten.

Gemäß einer anderen Verfahrensvariante wird das "kurze" Ende des Fadens vor dem Ausschäumen der Textilhülle an der Öffnung gesichert.

D.h., bei dieser Durchführungsform ist nur ein Ende als langes greifbares Ende zum Ziehen vorhanden, während das "kurze" Ende in der Textilhülle unsichtbar bleibt. Die Sicherung erfolgt durch Verknoten und/oder Vernähen vorzugsweise von "links" vor dem Ausschäumen.

Gemäß einer besonderen Durchführungsform des neuen Verfahrens wird der Faden um ein Ende der Öffnung herumgeführt, und es werden an ihrem anderen Ende zwei greifbare Enden des Fadens zum Ziehen belassen.

Gemäß einer weiteren Durchführungsform werden zwei gegenläufige Fäden verwendet, bei denen jeweils ein Ende an der Öffnung gesichert wird und das zweite Ende jeweils als langes greifbares Ende belassen wird.

Dabei ist es möglich, gleichartige Fadenenden jeweils am gleichen Ende der Öffnung vorzusehen. Günstiger ist es jedoch, wenn gleiche Fadenenden jeweils an den entgegengesetzten Enden der Öffnung angeordnet sind, weil sich dann beim Ziehen der langen Fadenenden in entgegengesetzter Richtung die auf die Hülle einwirkenden Zugkräfte aufheben.

Gemäß einer weiteren Durchführungsform des neuen Verfahrens werden zwei gegenläufige lange Fäden mit je zwei greifbaren Enden verwendet.

"Gegenläufig" heißt hier, daß die Zickzack-Führungen der beiden Fäden im wesentlichen spiegelbildlich verlaufen, was sich durch die Kräfteeinwirkung auf die Hülle beim Zusammenziehen der Fäden als vorteilhaft erweist. Hier muß zum Verschließen der Öffnung an allen vier Fadenenden gleichzeitig mit möglichst gleicher Kraft gezogen werden.

Der Gegenstand geht aus von einer flexiblen, aus einzelnen mit Nähten verbundenen Zuschnitten bestehenden, eine Weichschaumstoff-Füllung aufweisenden Hülle, wobei in einer Naht eine mit mindestens einem Faden verschlossene Öffnung vorgesehen ist.

Das Neue ist darin zu sehen, daß der Faden und die Ränder der Öffnung auf der Innenseite der Hülle eine dauerhafte, sichernde Verklebung durch das Reaktionsgemisch bzw. den Weichschaumstoff aufweisen.

Dieser neue Gegenstand weist alle im Zusammenhang mit dem neuen Verfahren vorstehend beschriebenen Vorteile auf Die Verklebung erfolgt dabei während des Ausreagierens des Reaktionsgemisches und der daraus ausgehärtete Weichschaumstoff erhält die Verklebung aufrecht.

An sich ist der Ablauf des neuen Verfahrens leicht nachvollziehbar, und der Aufbau des neuen Gegenstandes ist leicht vorstellbar. Trotzdem sei das neue Verfahren anhand eines Durchführungsbeispiels nachstehend näher erläutert. Das Prinzip ist in der Zeichnung dargestellt. Es zeigen:
- Fig.1: die nicht ausgeschäumte Hülle aus Textil eines Gegenstandes im Abriß von "links" d.h. von innen,
- Fig.2: die Hülle im Abriß gemäß Fig.1 mit aufgezogener Wende- und Einfüllöffnung,
- Fig.3: die ausgeschäumte Hülle eines Gegenstandes im Abriß von "rechts", d.h. von außen mit fast zugezogener Wende- und Einfüllöffnung und
- Fig.4: einen Schnitt durch den Gegenstand mit ausgeschäumter Hülle im Abriß.

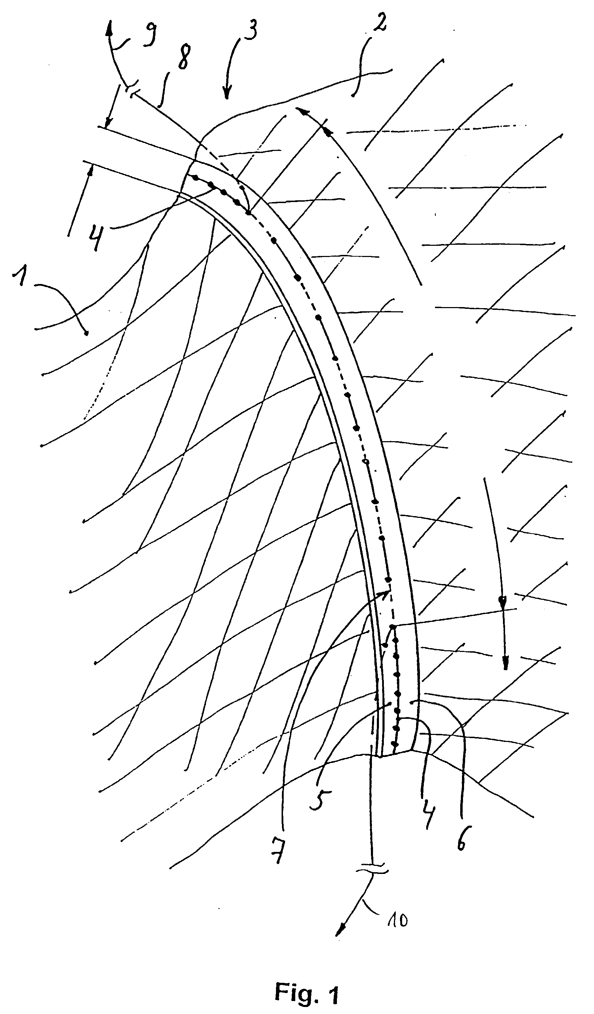

In Fig. 1 besteht der Gegenstand aus Zuschnitten 1 und 2 einer Hülle 3 aus Textil, welche durch eine maschinelle Naht 4 verbunden sind, Als Nahtzugabe weisen die Zuschnitte 1, 2 Ränder 5 und 6 auf In der Naht 4 ist eine Öffnung 7 zum Wenden und Füllen der Hülle 3 belassen, über welche sieh die Ränder 5, 6 fortsetzen. Im Bereich der Öffnung 7 sind diese Ränder 5, 6 durch einen aus einem Monofil bestehenden langen Faden 8 lose im Zickzack zusammengezogen. Er besitzt zwei lange, von Hand greifbare und daran ziehbare Enden 9 und 10.

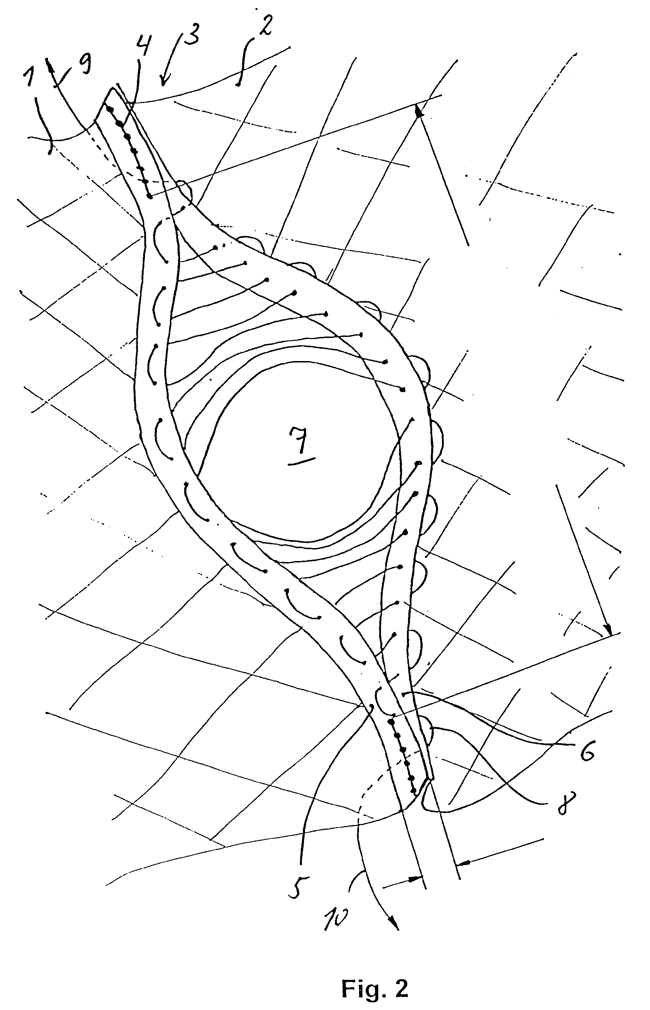

In Fig. 2 ist die Öffnung 7 auseinandergezogen, wobei deutlich zu sehen ist, daß dadurch die Enden 9, 10 des Monofils 8 teilweise in den Bereich der Öffnung 7 hineingerutseht sind, aber ihre restlichen Teile immer noch greifbar bleiben.

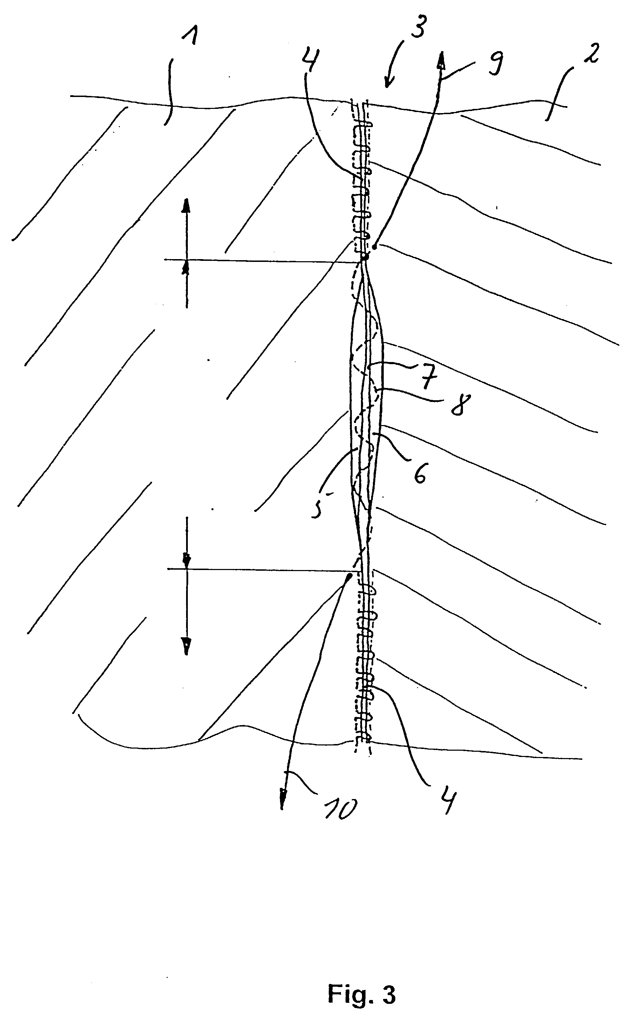

In Fig. 3 ist die in der Naht 4 angeordnete Öffnung 7 durch Ziehen an den Enden 9, 10 des Monofils 8 demonstrationshalber nur fast verschlossen.

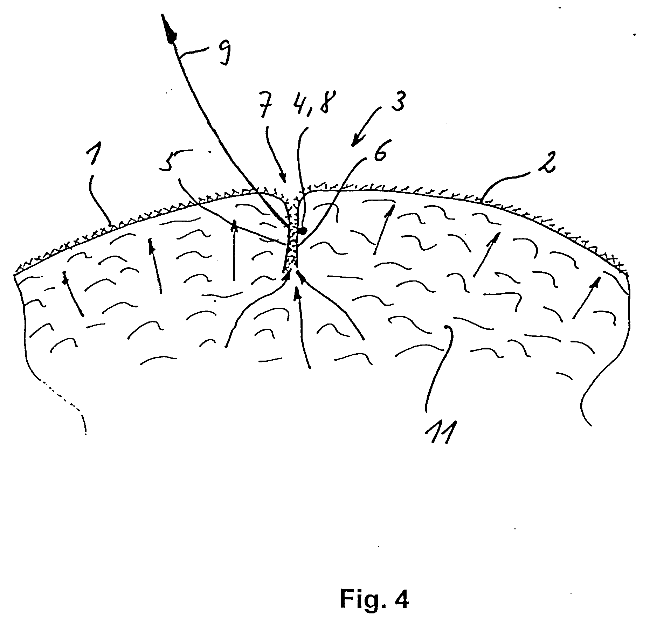

In Fig. 4 schließlich zeigt der Schnitt durch den Gegenstand bzw. durch die ausgeschäumte Hülle 3, wie die als Nahtzugabe dienenden, nach innen gewandten Ränder 5, 6 durch den Monofil 8 zusammengepreßt und alles durch den ausgehärteten weichen Polyurethan-Schaumstoff 11 verklebt ist, wodurch der Faden 8 gegen Lösen gesichert ist.

## Patentansprüche

1. Verfahren zum Herstellen von Gegenständen aus ausgeschäumten flexiblen Hüllen (3), indem eine Hülle (3) von "links" aus mindestens zwei Zuschnitten (1, 2) zusammengenäht wird, wobei in einer Naht (4) eine Öffnung (7) mit Rändern (5, 6) belassen und die Hülle (3) durch diese Öffnung (7) auf "rechts" gewendet und mit einem fließfähigen Reaktionsgemisch ausgeschäumt wird und wobei danach die Öffnung (7) mit einem Faden (8) verschlossen wird, dadurch gekennzeichnet, daß die Ränder (5, 6) der verbliebenen Öffnung (7) von "links" mit mindestens einem langen, mindestens ein greifbares Ende (9, 10) aufweisenden, weit überstehenden Faden (8) im Zickzack mehrfach verbunden werden, daß die Öffnung (7) geweitet wird, wobei der Faden (8) nachgezogen wird, daß erst nun die Hülle (3) durch diese Öffnung (7) auf "rechts" gewendet und mittels eines während des Ausreagierens Klebwirkung aufweisenden Reaktionsgemisches ausgeschäumt wird, daß nach dem Ausschäumen die Öffnung (7) durch Ziehen an dem greifbaren Ende (9, 10) des langen Fadens (8) zusammengezogen und verschlossen wird und daß nach dem Verschließen die Ränder (5,6) sowie der Faden (8) durch das expandierende Reaktionsgemisch dauerhaft verklebt werden und daß das an der verschlossenen Öffnung (7) überstehende Ende des Fadens (9, 10) nach dem Ausreagieren des Reaktionsgemisches entfernt wird.

2. Verfahren nach Anspruch 1, dadurch gekennzeichnet, daß als Faden (8) ein Monofil verwendet wird.

3. Verfahren nach einem der Ansprüche 1 oder 2, dadurch gekennzeichnet, daß das greifbare Ende (9, 10) des Fadens (8) nach dem Verschließen der Öffnung (7), aber vor dem Entfernen des überstehenden Endes (9, 10), gesichert wird.

4. Verfahren nach einem der Ansprüche 1 bis 4, dadurch gekennzeichnet, daß ein 'kurzes" Ende des Fadens (8) vor dem Ausschäumen der Hülle (3) an der Öffnung (7) gesichert wird.

5. Verfahren nach Anspruch 2, dadurch gekennzeichnet, daß der Faden (8) um ein Ende der Öffnung (7) herumgeführt wird und zwei überstehende, greifbare Enden (9,10) zum Ziehen belassen werden.

6. Verfahren nach den Ansprüchen 1, 2, oder 3, dadurch gekennzeichnet, daß zwei gegenläufige Fäden verwendet werden, bei denen jeweils ein Ende an der Öffnung (7) gesichert wird und das zweite Ende jeweils als langes greifbares Ende (9, 10) belassen wird.

7. Verfahren nach den Ansprüchen 1, 2 oder 3, dadurch gekennzeichnet, daß zwei gegenläufige lange Fäden (8) mit je zwei greifbaren Enden (9, 10) verwendet werden.

8. Gegenstand aus einer flexiblen, aus einzelnen durch Nähte (4) verbundene Zuschnitte (1, 2) bestehenden, eine Weichschaumstoff-Füllung aufweisenden Hülle (3), wobei in einer Naht (4) eine mit mindestens einem Faden (8) verschlossene Öffnung (7) vorgesehen ist, dadurch gekennzeichnet, daß der Faden (8) und die Ränder (5, 6) der Naht (4) auf der Innenseite der Hülle (3) eine dauerhafte, sichernde Verklebung durch das Reaktionsgemisch bzw. den ausgehärteten Weichschaumstoff (11) aufweisen.
